# EUROPÄISCHE PATENTSCHRIFT

(11) **EP 0 533 119 B1**
(45) Veröffentlichungstag und Bekanntmachung des Hinweises auf die Patenterteilung: **13.12.1995**
(21) Anmeldenummer: 92115789.7
(22) Anmeldetag: 16.09.1992
(51) Int. Cl.: G01L 9/00, G01L 7/18

(54) **Vorrichtung zum Messen von auf eine Unterlage einwirkendem Druck**
Device for measuring the pressure acting on a base
Dispositif pour mesurer la pression agissant sur un appui

(30) Priorität: 17.09.1991 DE 4131257
(43) Veröffentlichungstag der Anmeldung: 24.03.1993
(73) Patentinhaber: Wesemann, Rolf, D-38239 Salzgitter (DE); Ahrens, Are, D-38543 Hillerse (DE); Baretti, Rüdiger, D-33330 Gütersloh (DE)
(72) Erfinder: Wesemann, Rolf, D-38239 Salzgitter (DE); Ahrens, Are, D-38543 Hillerse (DE); Baretti, Rüdiger, D-33330 Gütersloh (DE)
(74) Vertreter: Lins, Edgar, Dipl.-Phys. Dr.jur.

(56) Entgegenhaltungen:
- DE-A- 2 904 844
- DE-A- 3 625 098
- GB-A- 937 201
- US-A- 4 149 285
- US-A- 4 402 226
- PATENT ABSTRACTS OF JAPAN vol. 14, no. 488 (M-1039)(4431) 24. Oktober 1990 & JP-A-21 98 851
- PATENT ABSTRACTS OF JAPAN vol. 12, no. 46 (P-665)(2893) 12. Februar 1988 & JP-A- 62 194 432
- PHILIPS JOURNAL OF RESEARCH Bd. 43, Nr. 2, 5. Juli 1988, EINDHOVEN, NL Seiten 137 - 151 P.J. SEVERIN ET AL. 'A SIMPLE MULTIMODE FIBRE INTERFEROMETRIC SENSOR FOR PRESSURE-RELATED MEASUREMENTS'

## Beschreibung

Die Erfindung betrifft eine Vorrichtung zum Messen von auf eine Unterlage einwirkendem Druck mit wenigstens einer mit einem Fluid gefüllten geschlossenen Tasche mit flexiblen Taschenwänden, an die ein Kapillarschlauch angeschlossen ist, an dessen freiem Ende eine eine Druckveränderung detektierende Auswertungseinrichtung angeschlossen ist.

Es ist bekannt, eine Druckmessung mit elektronischen Sensoren durchzuführen, die einen auf den Sensor ausgeübten Druck in ein elektrisches Signal umwandeln, das, gegebenenfalls nach einer Verstärkung, über elektrische Leitungen zu einer Auswertungseinrichtung übertragbar ist. Derartige Sensoren sind nicht in jedem Fall einsetzbar, da sie feste Gehäuse aufweisen. Darüber hinaus sind diese Sensoren relativ empfindlich.

Mit den bekannten Sensoren gelingt es beispielsweise nicht, den von einer Person auf eine Sitzfläche oder Liegefläche ausgeübten Druck über die gesamte Fläche weitgehend fehlerfrei zu messen, da die Sensoren mit ihren festen Gehäusen die Druckverteilung störend beeinflussen.

Insbesondere zur Messung hoher Drücke ist es durch die DE-PS 882 690 und die DE 25 50 718 A1 bekannt, ein flüssigkeitsgefülltes Kissen bzw. eine flüssigkeitsgefüllte Dose zu verformen und die dadurch erzeugte Erhöhung des Innendrucks über einen Kapillarschlauch an eine Meßvorrichtung weiterzuleiten.

Für die Messung der von einer Person auf eine Sitzfläche oder Liegefläche ausgeübten Druck sind derartige Anordnungen ersichtlich nicht geeignet.

Durch die DE 36 25 098 A1 ist es grundsätzlich bekannt, die Verformung einer durch Druck verformten Membran optisch mit Hilfe zweier Lichtleitfasern zu messen. Die Lichtleitfasern sind dabei auf der vom Druck nicht beaufschlagten Seite der Membran angeordnet.

Erfindungsgemäß ist eine Vorrichtung der eingangs erwähnten Art dadurch gekennzeichnet, auf der Unterlage eine Vielzahl von Taschen zu einer flächigen Matrix angeordnet ist, deren Kapillarschläuche zu Gruppen zusammengefaßt aus dem Meßfeld herausgeführt und an eine außerhalb des Meßfeldes angeordnete Auswertungseinrichtung angeschlossen sind.

Die erfindungsgemäße Vorrichtung besteht aus einer flächigen Matrix von Taschen, die im Vergleich zur Unterlage nur eine geringe Ausdehnung haben. Die Taschen können sehr klein, beispielsweise in der Größe von etwa 2 cm x 3 cm ausgebildet sein, so daß eine praktisch punktförmige Messung für größere Oberflächen möglich ist.

Wesentlich für die Funktion der erfindungsgemäßen Vorrichtung ist, daß die flexiblen Taschenwände praktisch keine oder nur eine geringe Eigenelastizität haben, also praktisch keine Rückstellkräfte gegen eine Verformung entwickeln. Der auf die Tasche ausgeübte Druck wird über das Fluid zum Ende des Kapillarschlauchs übertragen. Ist das Fluid ein Gas, beispielsweise Luft, ist für die Übertragung die Kompressibilität des Fluids zu berücksichtigen. Diese Berücksichtigung entfällt, wenn das Fluid eine praktisch inkompressible Flüssigkeit ist. Ein besonderer Vorteil der erfindungsgemäßen Vorrichtung beruht darauf, daß sie gegenüber Temperaturen des Meßkörpers völlig unempfindlich ausgebildet sein kann. Bei einer längeren Übertragungsstrecke von dem die Druckeinleitung bewirkenden Meßkörper zum Sensor kann eine Temperaturübertagung auf den Sensor wirksam verhindert werden. Dies gilt insbesondere für luftgefüllte Schläuche als Übertragungsmedium und für die Ausführung der Taschen mit schlecht wärmeleitenden Kunststoffmaterialien. Wegen der nur teilweisen Füllung der Taschen ist eine Temperaturabhängigkeit des Druckes innerhalb der Taschen nicht gegeben.

Für die Handhabung, insbesondere im Reparaturfall, ist es zweckmäßig, wenn die Kapillarschläuche in jeweils eine Einführungsöffnung eine Kupplungsblocks eingeführt sind und die Auswertungseinrichtungen an die anderen Enden der Einführungsöffnungen des Kupplungsblocks angeschlossen sind.

Für die Detektion kann vorzugsweise ein Block mit einer Vielzahl von mit den Kapillarschläuchen kommunizierenden Bohrungen vorgesehen sein, die an ihrem dem jeweiligen Kapillarschlauch fernen Ende mit einer Membran verschlossen ist, die sich bei einer Volumenverminderung in der Tasche auswölbt. Die Auswölbung der Membran, die vorzugsweise durch einen optischen Detektor quantitativ bestimmbar ist, stellt ein Maß für die Volumenverminderung der Tasche, also die Erhöhung des von außen auf die Tasche wirkenden Drucks, dar. Die Bohrungen des zur Auswertung bestimmten Blockes können zweckmäßigerweise mit den anderen Enden der Einführungsöffnungen des Kupplungsblocks durch ebenfalls als Kapillarschläuche ausgebildete Schläuche verbunden sein.

In einer einfachen Ausführungsform kann der optische Detektor aus einem auf die Membran gerichteten, an eine Lichtquelle angeschlossenen ersten Lichtleiter und einem an einen Lichtmengendetektor angeschlossenen zweiten Lichtleiter bestehen. Die beiden Lichtleiter können dabei parallel zueinander auf die Membran gerichtet sein und mit planen Stirnflächen vor der Membran enden. Die Membran ist in diesem Fall lichtreflektierend ausgebildet. Mit dieser Anordnung ist der Abstand der Membran von den planen Stirnflächen der beiden Lichtleiter meßbar. Der Abstand der Membran von den planen Stirnflächen der Lichtleiter verändert sich mit der veränderten Wölbung der Membran.

In einer konstruktiv vorteilhaften Ausführungsform sind die Lichtleiter zusammen mit dem zugehörigen Kapillarschlauch in eine Bohrung des Blockes eingeführt. Der Kapillarschlauch und die Lichtleiter bilden somit ein Tripel, das auf eine Seite der abgedichtet eingespannten Membran gerichtet ist. Die Detektion der Wölbung findet daher auf derselben Seite der Membran statt, die von dem Kapillarschlauch beaufschlagt wird. Eine für die erfindungsgemäße Vorrichtung besonders geeignete Tasche ist flächig ausgebildet und in einer einfachen Ausführungsform aus zwei miteinander gasdicht verbundenen flächigen Taschenwänden gebildet. Da die Taschenwände keine eigenen Rückstellkräfte aufweisen sollen, ist es zweckmäßig, in die Tasche eine elastisch kompressible, die Taschenwände im drucklosen Zustand mit Abstand zueinander haltende Einlage eingelegt ist. Diese sorgt dafür, daß die Tasche im drucklosen Zustand eine gewisse Bauchigkeit einnimmt und daher bei der Montage eine definierte Ausgangsposition aufweist. Die Einlage ist vorzugsweise aus einem Vlies gebildet.

Für die Anwendungsfälle, in denen die Druckeinwirkung auf die Unterlage diese verformt, kann es zweckmäßig sein, neben der Größe des Druckes auch die Tiefe der Verformung der Meßoberfläche zu messen. Sofern die Verformung eine lotrechte Komponente aufweist, kann sie durch eine zusätzliche, flüssigkeitsgefüllte, gegen Druckeinwirkung geschützte und auf der Unterlage angeordnete Tasche mit flexiblen Taschenwänden und flüssigkeitsgefüllten Schläuchen gemessen werden, wenn die Taschen oberhalb des Blockes der Auswertungseinrichtung angeordnet sind. Es entsteht dann eine Wassersäule oberhalb der Auswertungseinrichtung, deren Höhe von der momentanen relativen Höhe der Tasche abhängt. Bei einer Druckausübung auf die Unterlage wird der Druck von der Tasche ferngehalten, die Tasche nimmt aber an der Verformung der Unterlage teil und ändert ihre Höhe, die durch die an der Auswertungseinrichtung bestimmbaren Änderung der Höhe der Wassersäule detektierbar ist.

Die erfindungsgemäße Vorrichtung weist besondere Vorzüge auf, wenn eine Oberfläche mit einer Vielzahl von Taschen belegt ist und die Kapillarschläuche der Taschen an einem Block mit einer entsprechenden Vielzahl von Bohrungen und Membranen angeschlossen ist.

Dabei wird es zweckmäßig sein, zur Montage nur die Kapillarschläuche an einen Kupplungsblock anschließen zu müssen, von dessen anderer Seite ausgehend eine Verbindung mit Kapillarschläuchen zu dem Block mit den Membranen hergestellt ist. Die Verbindung zwischen dem Kupplungsblock und dem Block mit den Membranen kann dabei fest montiert sein, so daß an dem Block mit den Membranen auch die Lichtleiter fest montiert sein können. Die Vermessung eines anderen Gegenstandes bedarf daher lediglich einer neuen Anordnung und gegebenenfalls Montage der Taschen mit den Kapillarschläuchen an den Kupplungsblock.

Die Vielzahl der über die zweiten Lichtleiter übertragenen optischen Signale läßt sich erfindungsgemäß schnell und durch einen Rechner auswertbar dadurch erfassen, daß die zweiten Lichtleiter in einer eine Matrix bildenden Halterung enden und die Matrix von einer Videokamera abtastbar ist. Dieses erfindungsgemäße Prinzip erlaubt somit die praktisch gleichzeitige Erfassung einer Vielzahl von punktförmigen, optisch dargestellten Meßsignalen, in dem die punktförmigen optischen Meß signale in der Matrix angeordnet und von der Videokamera abgetastet werden. Bei Verwendung einer CCD-Kamera kann durch die Zuordnung einer Vielzahl (beispielsweise 16 x 16) Pixelpunkten zu einem punktförmigen Meßsignal eine sehr feine Intensitätsabstufung erfaßt werden.

Die Erfindung erlaubt erstmalig eine praktisch rückwirkungsfreie Aufnahme der von einer Person ausgeübten Druckverteilung auf eine Sitz- oder Liegefläche. Hierzu wird die entsprechende Sitz- oder Liegefläche mit einer Vielzahl von Taschen belegt, die beispielsweise in eine geeignete Textilhalterung eingesetzt werden.

Die Erfindung soll im folgenden anhand von in der Zeichnung dargestellten Ausführungsbeispielen näher erläutert werden. Es zeigt:
- Figur 1 -: eine prinzipielle Darstellung der erfindungsgemäßen Vorrichtung
- Figur 2 -: eine Draufsicht auf eine Tasche
- Figur 3 -: Seitenansichten der Tasche gemäß Figur 2 in drei möglichen Zuständen
- Figur 4 -: eine schematische Darstellung der Anordnung in einem Block mit einer Membran
- Figur 5 -: eine Draufsicht auf einen Teil der Anordnung gemäß Figur 4
- Figur 6 -: eine schematische Erläuterung des Meßprinzips mit zwei Lichtleitern
- Figur 7 -: eine Kennlinie für das in Figur 6 dargestellte Meßprinzip
- Figur 8 -: eine schematische Darstellung einer Anordnung einer Vielzahl von Taschen auf einer ebenen Unterlage
- Figur 9 -: eine schematische Darstellung einer Vielzahl von Taschen auf den Oberflächen eines Würfels
- Figur 10 -: eine Draufsicht auf einen Kupplungsblock
- Figur 11 -: einen Vertikalschnitt durch den Kupplungsblock gemäß Figur 10
- Figur 12 -: eine schematische Darstellung der Anordnung aus Kupplungsblock, Meßblock und einem Block für die Anordnung der Lichtleiter in Matrixform
- Figur 13 -: eine schematische Darstellung von Auswertungsmöglichkeiten für die mit der erfindungsgemäßen Anordnung gewonnenen Meßsignale.

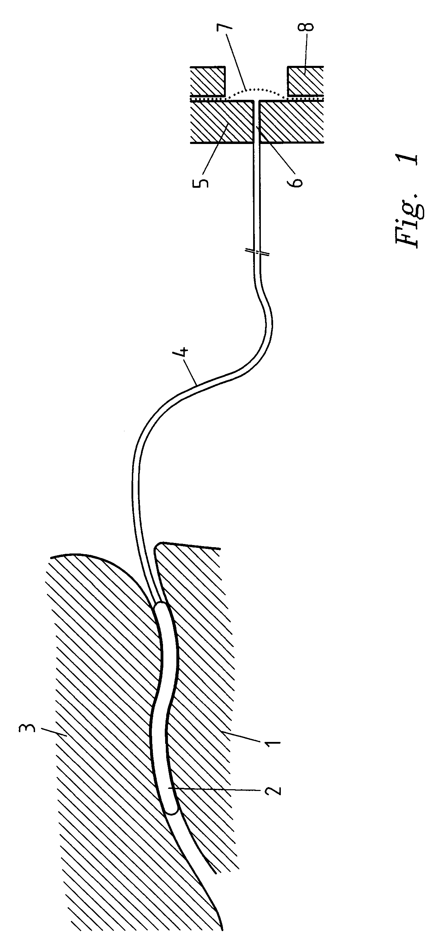

Figur 1 zeigt eine Unterlage 1, auf der eine flächige Tasche 2 angeordnet ist. Die Unterlage 1 ist durch einen über eine Materialschicht 3 übertragenen Druck verformt. Da die Tasche 2 aus flexiblen Taschenwänden besteht, macht sie die Verformung mit, ohne merkliche Rückstellkräfte zu erzeugen.

An den Innenraum der Tasche 2 ist ein Kapillarschlauch 4 angeschlossen, der in einem Block 5 endet. Der Block 5 ist mit einer den Kanal des Kapillarschlauchs 4 fortsetzenden Bohrung 6 versehen. Die Bohrung ist auf der nicht von dem Kapillarschlauch 4 beaufschlagten Seite durch eine Membran 7 abgedeckt, die durch einen ringförmigen Gegenhalter 8 abgedichtet am Block 5 eingespannt ist.

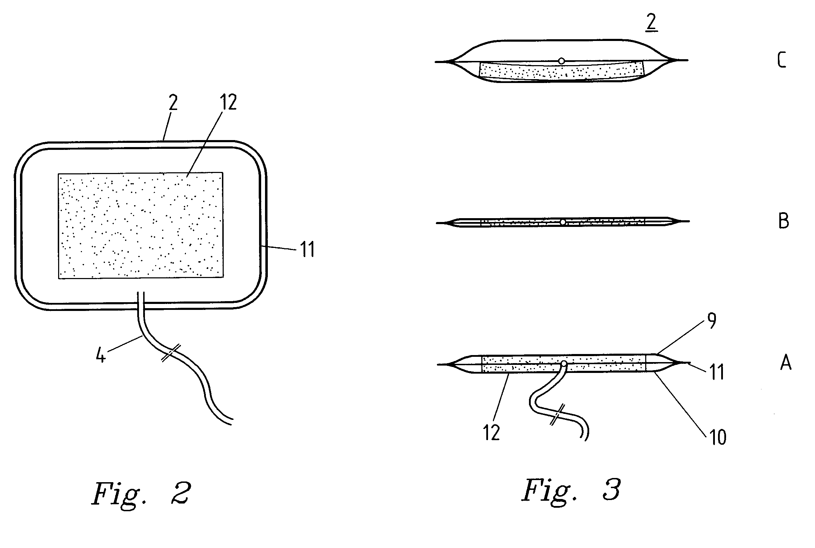

Die Figuren 2 und 3 lassen den Aufbau der Tasche 2 erkennen. Die Tasche 2 weist in Draufsicht einen rechteckigen Grundriß auf und besteht aus zwei flächigen Folien als Taschenwände 9, 10, die an ihrem Rand umlaufend durch eine Schweißnaht 11 gasdicht miteinander verbunden sind. Auf einer Längsseite ist durch die Schweißnaht 11 der Kapillarschlauch 4 hindurchgeführt. In den Innenraum der Tasche 2 ist eine rechteckige Einlage 12 aus einem Vlies eingelegt.

Die drucklose Normalposition der Tasche 2 ist in Figur 3A dargestellt. Die Einlage 12 dient als Abstandshalter für die beiden Taschenwände 9, 10 aufgrund ihrer Normaldicke.

Durch einen auf die Tasche 2 ausgeübten Druck kann diese zusammengedrückt werden, wie dies in Figur 3B gezeigt ist. Das Zusammendrücken erfolgt maximal so weit, daß die beiden Taschenwände 9, 10 nur noch durch die Minimalstärke der kompressiblen Einlage 12 voneinander getrennt sind.

Figur 3C zeigt, daß die Tasche 2 auch eine stärkere Auswölbung aufweisen kann. Dies kann durch einen verringerten Umgebungsdruck oder durch eine Druckerhöhung in dem abgeschlossenen System Tasche 2/Kapillarschlauch 4, beispielsweise durch eine Temperaturerhöhung, hervorgerufen werden (Die Darstellung in Figur 3C ist aus Gründen der Deutlichkeit übertrieben erfolgt).

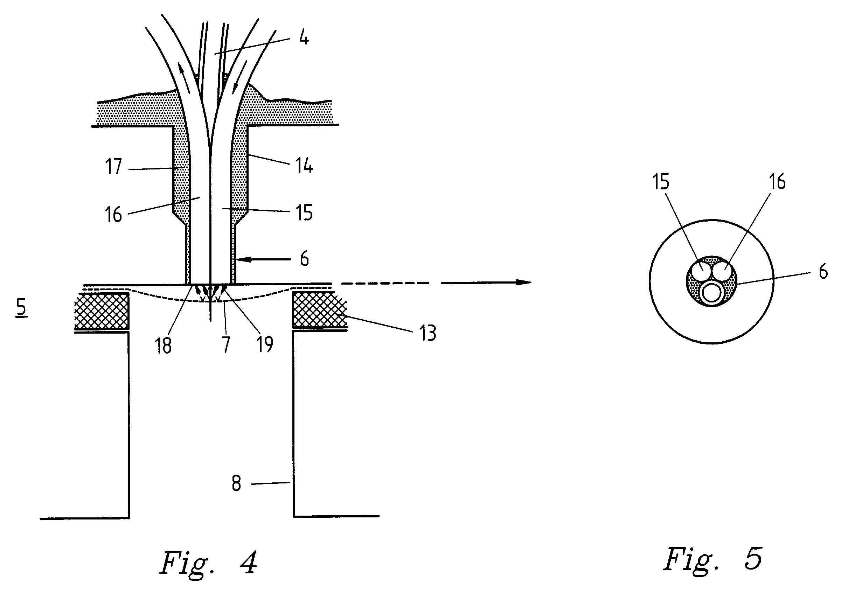

Figur 4 zeigt einen Schnitt durch den Block 5. Die den Kanal 6 verschließende Membran 7 ist über eine weich-elastische Dichtung 13 und den ringförmigen Gegenhalter 8 gegen den Block 5 geklemmt. Der Kanal 6 befindet sich am Ende einer Einführungsöffnung 14, in die nicht nur das Ende des Kapillarschlauchs 4 sondern auch die Enden eines ersten Lichtleiters 15 und eines zweiten Lichtleiters 16 eingeführt sind. Über eine Verengung geht die Einführungsöffnung 14 in den Kanal 6 über, in dem die Enden des Kapillarschlauchs 4 und der beiden Lichtleiter 15, 16 mit geringem Spiel eingeführt sind. Die Befestigung der Enden des Kapillarschlauchs 4 und der beiden Lichtleiter 15, 16 in der Einführöffnung 14 und dem Kanal 6 erfolgt durch einen Kleber 17, der zur Vermeidung von Lichtverlusten zweckmäßigerweise schwarz ist.

Wie unten noch näher ausgeführt werden wird ist der erste Lichtleiter 15 mit einer Lichtquelle und der zweite Lichtleiter 16 mit einer Lichtmeßeinrichtung verbunden. Eine Lichtübertragung von dem ersten Lichtleiter 15 auf den zweiten Lichtleiter 16 erfolgt durch Reflexion an der Membran 7, wobei regelmäßig der normale Reflexionsfaktor einer Gummimembran ausreicht. Für ein verbessertes Signal-Rausch-Verhältnis kann es allerdings zweckmäßig sein, die Membran 7 mit einer reflektierenden Beschichtung zu versehen.

Figur 5 verdeutlicht die Anordnung der beiden Lichtleiter 15, 16 in dem Kanal 6. Zweckmäßigerweise schließen die beiden Lichtleiter 15, 16 mit planen Stirnflächen 18, 19 mit der Wand des Blocks 5 fluchtend ab, gegen die die Membran 7 gespannt ist.

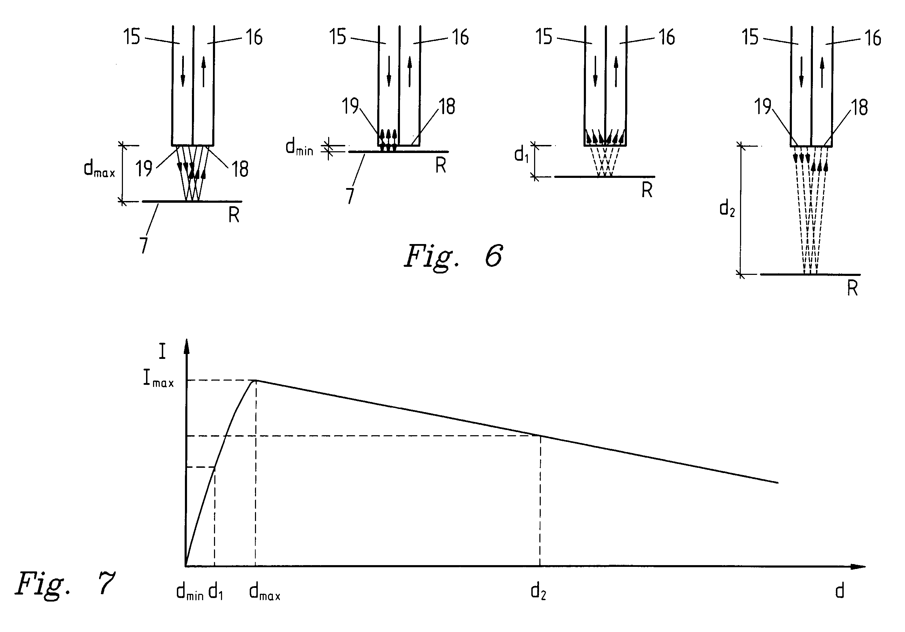

Figur 6 verdeutlicht das Meßprinzip für die optische Abstandsmessung mit den beiden Lichtleitern 15, 16. In Figur 6 ist ein minimaler Abstand dₘᵢₙ zwischen den planen Stirnflächen 18, 19 der Lichtleiter 16, 15 sowie ein maximaler Abstand dₘₐₓ dargestellt. Für den minimalen Abstand dₘᵢₙ ist erkennbar, daß das aus dem Lichtleiter 15 austretende Licht durch die praktisch unmittelbar vor der Stirnfläche 19 sitzende Membran vollständig reflektiert wird, so daß praktisch kein austretendes Licht in die Stirnfläche 18 des zweiten Lichtleiters 16 reflektiert wird.

Für einen mittleren Abstand d₁ wird ein Teil des aus dem ersten Lichtleiter 15 austretenden Lichts in den zweiten Lichtleiter 16 reflektiert. Bei dem dargestellten Abstand dₘₐₓ ist die reflektierte Lichtmenge maximal. Für einen weit über dem Abstand dₘₐₓ liegenden Abstand d₂ wird nur noch ein geringer Anteil des aus dem ersten Lichtleiter 15 austretenden Lichts auf die Stirnfläche 18 des zweiten Lichtleiters 16 fallen.

Daraus ergibt sich eine Kennlinie, wie sie in Figur 7 dargestellt ist. Für den minimalen Abstand dₘᵢₙ ist die reflektierte Lichtmenge 0. Über den mittleren Abstand d₁ nimmt die reflektierte Lichtmenge bis zu dem maximalen Abstand dₘₐₓ etwa linear zu. Danach ergibt sich ein stetiger Abfall der reflektierten und in den zweiten Lichtleiter 16 gelangenden Lichtmenge, was an der reflektierten Lichtmenge für den Abstand d₂ in Figur 7 verdeutlicht ist.

Für die Messung der Auswölbung der Membran 7, also für die Messung des Abstandes der Membran von den planen Stirnflächen 18, 19 der Lichtleiter 16, 15 wird nur der zwischen den Abständen dₘᵢₙ und dₘₐₓ liegende Bereich der Kennlinie in Figur 7 ausgenutzt.

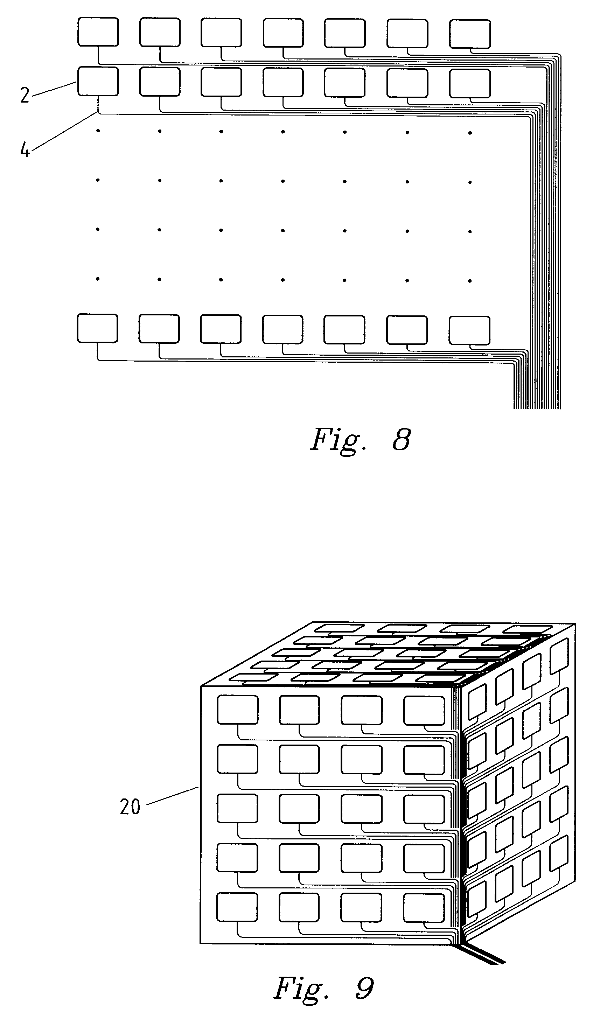

Besondere Vorteile ergeben sich bei der Anwendung der erfindungsgemäßen Anordnung mit einer Vielzahl von Taschen 2, wie sie in Figur 8 angedeutet ist. Mit der in Figur 8 dargestellten Anordnung läßt sich beispielsweise eine Sitz- oder Liegefläche eines Stuhls, einer Matratze oder eines Bettes bezüglich der von einer Person ausgeübten Druckverteilung vermessen. Hierzu sind über die Fläche in gleichmäßigen Abständen die Taschen 2 in Form einer flächigen Matrix verteilt. Die zugehörigen Kapillarschläuche 4 werden zusammengefaßt aus dem Meßfeld herausgeführt.

Figur 9 verdeutlich, daß auch die Oberflächen eines räumlichen Gebildes, hier eines Würfels 20 vermessen werden können. Statt des Würfels ist auch eine Druckmessung an den Oberflächen einer Fahrzeugkarosserie denkbar, um Aussagen über den auf die Oberfläche wirkenden Luftdruck während der Bewegung des Fahrzeugs zu erhalten.

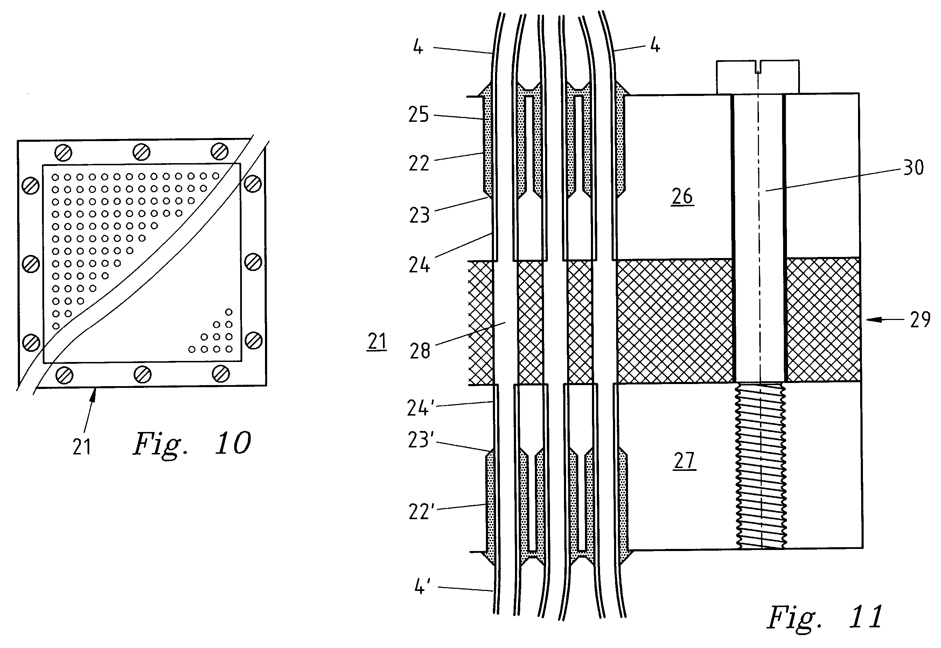

Figuren 10 und 11 zeigen eine vorteilhafte Vorrichtung zur Handhabung der Vielzahl von mit den Taschen 2 verbundenen Kapillarschläuchen 4. Diese werden in einen Kupplungsblock 21 eingeführt und dort ebenfalls in Form einer Matrix angeordnet. Der Kupplungsblock weist eine Vielzahl von Einführungsöffnungen 22 auf, in die die Enden der Kapillarschläuche 4 eingeführt werden. Über eine konische Verengung 23 gelangen die Enden der Kapillarschläuche 4 in eine Bohrung 24, die das Maß des Außendurchmessers der Kapillarschläuche 4 oder ein geringes Untermaß aufweist. Auf diese Weise ist sichergestellt, daß die Kapillarschläuche 4 dicht in der Bohrung 24 sitzen. Die Fixierung der Kapillarschläuche 4 in den Einführöffnungen 22 erfolgt durch einen eingefüllten Kleber 25. Die Einführöffnung 22 und Bohrung 24 sind in einer ersten Platte 26 ausgebildet, die durch eine analog aufgebaute Gegenplatte 27 und eine mit den Bohrungen 24 entsprechenden Bohrungen 28 versehenen Flächendichtung 29 zu dem Kupplungsblock 21 vervollständigt wird. Die beiden Platten 26, 27 werden durch Schrauben 30 miteinander verspannt, so daß die flächige Dichtung 29 zwischen den Platten 26, 27 gepreßt wird und die Gas- und Flüssigkeitsdichtheit des Kupplungsblocks 21 sicherstellt. In die Öffnungen 22′, 23′, 24′ sind den Kapillarschläuchen 4 entsprechende Verbindungsschläuche 4′ eingesetzt, die die Verbindung zwischen dem Kupplungsblock 21 und dem Block 5, an dem Membranen 7 gehalten werden, herstellen.

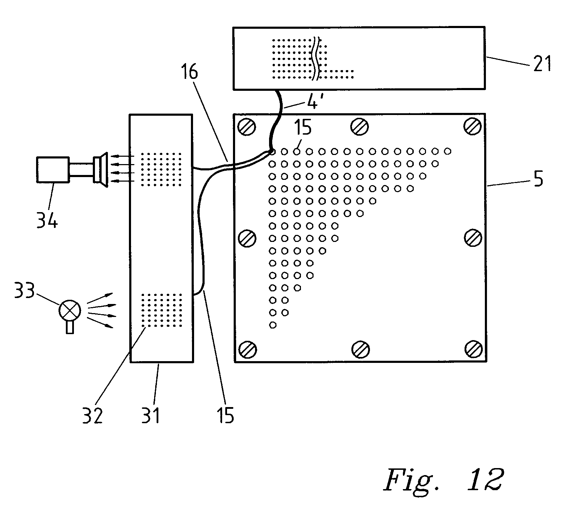

Eine schematische Darstellung dieser Verbindung ist in Figur 12 zu erkennen. Vom Kupplungsblock 21 führen Schläuche 4′ zu den einzelnen Kanälen 6 des Blockes 5. Die Kanäle 6 sind auf der in Figur 12 nicht erkennbaren Rückseite mit den Membranen verschlossen. In jedem Kanal 6 ist jeweils ein erster Lichtleiter 15 und ein zweiter Lichtleiter 16 in der anhand der Figuren 4 und 5 beschriebenen prinzipiellen Anordnung eingesetzt. Die anderen Enden der ersten Lichtleiter 15 sind in einer Halterung 31 zu einer rechteckigen Matrix 32 mit planen Stirnflächen in einer Ebene endend angeordnet, so daß Licht einer Lichtquelle 33 gleichmäßig in alle ersten Lichtleiter 15 eingespeist wird.

In einer analogen Anordnung enden die Stirnflächen der zweiten Lichtleiter in der Halterung 31 ebenfalls in einer rechteckigen Matrix, die von einer Kamera 34 abgetastet wird. Wird eine CCD-Kamera mit einer Anordnung von 720 x 580 Pixeln verwendet, können 45 x 36 zweite Lichtleiter eingesetzt werden, so daß für die zu messende Fläche größenordnungsmäßig 1600 Meßpunkte zur Verfügung stehen.

Durch die Verwendung von 16 x 16 Pixeln für jeden Meßpunkt sind größenordnungsmäßig 4000 Helligkeitsstufen für die Meßwerte diskriminierbar. Mit der Kamera 34 können die 1600 Meßpunkte praktisch gleichzeitig erfaßt und ausgewertet werden.

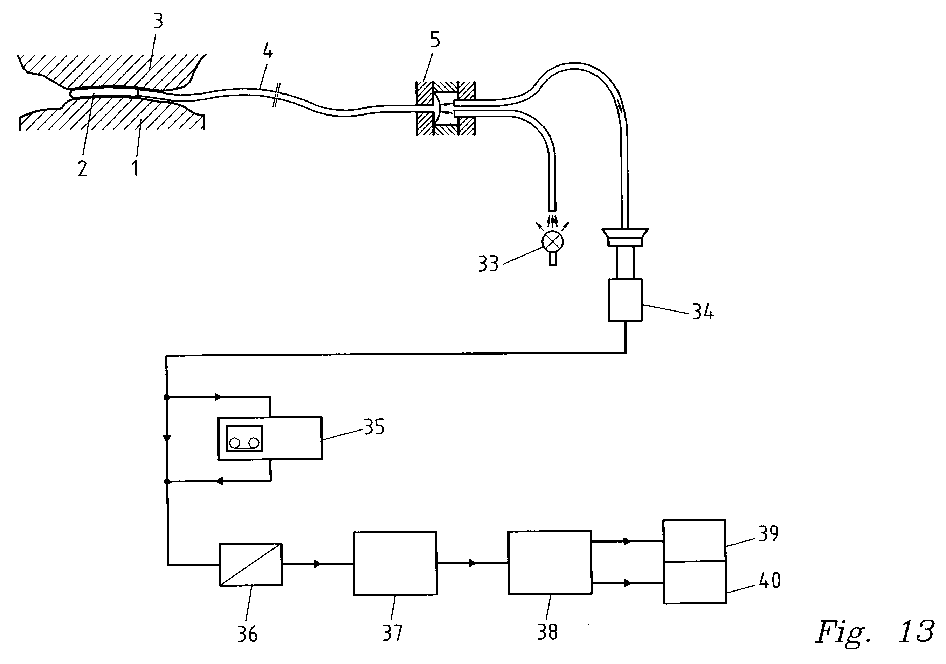

Figur 13 verdeutlicht die Auswertung mit der Kamera 34, deren Videosignal in einem Videorekorder 35 als Massenspeicher zwischengespeichert werden kann. Das Videosignal gelangt über einen Analog/Digital-Wandler 36 in einen Zwischenspeicher 37 und wird von einem Computer 38 ausgewertet, der die festgestellte Druckverteilung auf einem Bildschirm 39 und/oder einem Drucker 40 ausgeben kann. Durch die dargestellte Auswertung mit der Kamera 34 lassen sich somit Druckverteilungen mit einer kleinen Abtastperiode über eine lange Zeit abspeichern und auswerten.

## Patentansprüche

1. Vorrichtung zum Messen von auf eine Unterlage (1) einwirkendem Druck mit wenigstens einer mit einem Fluid gefüllten geschlossenen Tasche (2) mit flexiblen Taschenwänden (9, 10), an die ein Kapillarschlauch (4) angeschlossen ist, an dessen freiem Ende eine eine Druckveränderung detektierende Auswertungseinrichtung angeschlossen ist, **dadurch gekennzeichnet**, **daß** auf der Unterlage (1) eine Vielzahl von Taschen (2) zu einer flächigen Matrix angeordnet ist, deren Kapillarschläuche (4) zu Gruppen zusammengefaßt aus dem Meßfeld herausgeführt und an eine außerhalb des Meßfeldes angeordnete Auswertungseinrichtung angeschlossen sind.

2. Vorrichtung nach Anspruch 1, dadurch gekennzeichnet, daß die Kapillarschläuche (4) in jeweils eine Einführungsöffnung (22) eines Kupplungsblocks (21) eingeführt sind und daß die Auswertungseinrichtungen an die anderen Enden der Einführungsöffnungen (22) angeschlossen sind.

3. Vorrichtung nach Anspruch 2, dadurch gekennzeichnet, daß die Auswertungseinrichtungen durch mit den Kapillarschläuchen (4, 4′) kommunizierende Bohrungen (6) eines Blockes (5) gebildt sind, die an ihrem dem Kapillarschlauch (4, 4′) fernen Ende mit einer Membran (7) verschlossen sind, die sich bei einer Volumenverminderung in der Tasche (2) auswölbt.

4. Vorrichtung nach Anspruch 3, gekennzeichnet, durch einen optischen Detektor (15, 16) für die Auswölbung der Membran (7).

5. Vorrichtung nach Anspruch 4, dadurch gekennzeichnet, daß der optische Detektor aus einem auf die Membran (7) gerichteten, an eine Lichtquelle (33) angeschlossenen ersten Lichtleiter (15) und einem an einen Lichtmengendetektor (34) angeschlossenen zweiten Lichtleiter (16) besteht.

6. Vorrichtung nach Anspruch 5, dadurch gekennzeichnet, daß die beiden Lichtleiter (15, 16) parallel zueinander auf die Membran (7) gerichtet sind und mit planen Stirnflächen (19, 18) unmittelbar vor der Membran enden.

7. Vorrichtung nach einem der Ansprüche 4 bis 6, dadurch gekennzeichnet, daß die Membran (7) lichtreflektierend beschichtet ist.

8. Vorrichtung nach einem der Ansprüche 5 bis 7, dadurch gekennzeichnet, daß die Lichtleiter (15, 16) zusammen mit dem zugehörigen Kapillarschlauch (4, 4′) in eine Bohrung (6) des Blocks (5) eingeführt sind.

9. Vorrichtung nach einem der Ansprüche 1 bis 8, dadurch gekennzeichnet, daß die Tasche (2) aus zwei miteinander gasdicht verbundenen flächigen Taschenwänden (9, 10) gebildet ist.

10. Vorrichtung nach einem der Ansprüche 1 bis 9, dadurch gekennzeichnet, daß in die Tasche (2) eine elastischkompressible, die Taschenwände (9, 10) im drucklosen Zustand mit Abstand zueinander haltende Einlage (12) eingelegt ist.

11. Vorrichtung nach Anspruch 10, dadurch gekennzeichnet, daß die Einlage (12) aus einem Vlies besteht.

12. Vorrichtung nach einem der Ansprüche 1 bis 11, dadurch gekennzeichnet, daß eine zusätzliche, flüssigkeitsgefüllte, gegen Druckeinwirkung geschützte, auf der Unterlage (1) angeordnete Tasche (2) mit flexiblen Taschenwänden (9, 10) oberhalb des Blockes (5) der Auswertungseinrichtung angeordnet ist und so durch Ausnutzung des hydrostatischen Drucks zur Bestimmung der relativen Höhe der Tasche (2) dient.

13. Vorrichtung nach einem der Ansprüche 3 oder 12, dadurch gekennzeichnet, daß die zweiten Lichtleiter (16) mit ihren Enden in einer Halterung (31) eine Matrix bilden, die von einer Videokamera (34) abtastbar ist.

## Claims

1. Device for measuring the pressure acting on a base (1) with at least one fluid-filled, closed pocket (2) with flexible pocket walls (9, 10), to which a capillary tube (4) is connected, to the free end of which an evaluation device detecting a change in pressure is connected, characterized in that a large number of pockets (2) is disposed on the base (1) to form a two-dimensional matrix, the capillary tubes (4) of which are led combined into groups out of the measuring field and connected to an evaluation device disposed outside the measuring field.

2. Device according to claim 1, characterized in that the capillary tubes (4) are each led into an inlet aperture (22) of a coupling block (21) and that the evaluation devices are connected to the other ends of the inlet apertures (22).

3. Device according to claim 2, characterized in that the evaluation devices are formed by bores (6) of a block (5) communicating with the capillary tubes (4, 4′), which bores are closed at their end remote from the capillary tube (4, 4′) by a membrane (7), which swells in the event of a reduction in volume in the pocket (2).

4. Device according to claim 3, characterized by an optical detector (15, 16) for the swelling of the membrane (7).

5. Device according to claim 4, characterized in that the optical detector consists of a first optical fibre (15) directed towards the membrane (7) and connected to a light source (33) and a second optical fibre (16) connected to a light emission detector (34).

6. Device according to claim 5, characterized in that the two optical fibres (15, 16) are directed parallel with one another towards the membrane (7) and end with flat front faces (19, 18) directly in front of the membrane.

7. Device according to any one of claims 4 to 6, characterized in that the membrane (7) is light-reflectively coated.

8. Device according to any one of claims 5 to 7, characterized in that the optical fibres (15, 16) are led together with the associated capillary tube (4, 4′) into a bore (6) of the block (5).

9. Device according to any one of claims 1 to 8, characterized in that the pocket (2) is formed of two two-dimensional pocket walls (9, 10) joined gas-tightly together.

10. Device according to any one of claims 1 to 9, characterized in that inserted into the pocket (2) is an elastically compressible insert (12) keeping the pocket walls (9, 10) at a distance from one another in the pressureless state.

11. Device according to claim 10, characterized in that the insert (12) consists of a nonwoven fabric.

12. Device according to any one of claims 1 to 11, characterized in that an additional, liquid-filled pocket (2) with flexible pocket walls (9, 10), which is protected against the effect of pressure and disposed on the base (1), is disposed above the block (5) of the evaluation device and thus serves to ascertain the relative height of the pocket (2) by the utilization of hydrostatic pressure.

13. Device according to one of claims 3 or 12, characterized in that the second optical fibres (16) form with their ends in a holding device (31) a matrix, which is scannable by a video camera (34).

## Revendications

1. Dispositif pour mesurer une pression s'exerçant sur un appui (1), comportant au moins une poche (2) fermée, remplie d'un fluide, ayant des parois flexibles (9, 10) et à laquelle est raccordé un tube capillaire (4), à l'extrémité libre duquel est raccordé un dispositif d'exploitation détectant la variation de la pression, caractérisé en ce que de multiples poches (2) sont disposées en une matrice de surface sur l'appui (1), les tubes capillaires (4) de ces poches étant rassemblés en groupes, conduits hors du champ de mesure, et raccordés à un dispositif d'exploitation disposé hors du champ de mesure.

2. Dispositif selon la revendication 1, caractérisé en ce que les tubes capillaires (4) sont introduits chacun dans une ouverture d'introduction (22) d'un bloc de raccordement (21), et en ce que les dispositifs d'exploitation sont raccordés aux autres extrémités des ouvertures d'introduction (22).

3. Dispositif selon la revendication 2, caractérisé en ce que les dispositifs d'exploitation sont réalisés par des alésages (6) d'un bloc (5) qui communiquent avec les tubes capillaires (4, 4′) et qui à leur extrémité éloignée du tube capillaire (4, 4′) sont fermés par une membrane (7) qui se bombe en cas de diminution de volume dans la poche (2).

4. Dispositif selon la revendication 3, caractérisé par un détecteur optique (15, 16) pour le bombement de la membrane (7).

5. Dispositif selon la revendication 4, caractérisé en ce que le détecteur optique consiste en un premier guide de lumière (15) raccordé à une source lumineuse (33) et dirigé vers la membrane (7), et en un second guide de lumière (16) raccordé à un détecteur (34) de quantité de lumière.

6. Dispositif selon la revendication 5, caractérisé en ce que les deux guides de lumière (15, 16) sont dirigés parallèlement l'un à l'autre vers la membrane (7) et se terminent par des faces frontales planes (19, 18) directement devant la membrane.

7. Dispositif selon l'une des revendications 4 à 6, caractérisé en ce que la membrane (7) comporte un revêtement réfléchissant la lumière.

8. Dispositif selon l'une des revendications 5 à 7, caractérisé en ce que les guides de lumière (15, 16) sont introduits avec le tube capillaire associé (4, 4′) dans un alésage (6) du bloc (5).

9. Dispositif selon l'une des revendications 1 à 8, caractérisé en ce que la poche (2) est constituée de deux parois de poche (9, 10) aplaties reliées l'une à l'autre de manière étanche au gaz.

10. Dispositif selon l'une des revendications 1 à 9, caractérisé en ce qu'une garniture intérieure (12) élastiquement compressible est installée dans la poche (2) et maintient à distance mutuelle les parois (9, 10) de la poche en l'absence de pression.

11. Dispositif selon la revendication 10, caractérisé en ce que la garniture intérieure (12) consiste en un tampon de fibres.

12. Dispositif selon l'une des revendications 1 à 11, caractérisé en ce qu'une poche additionnelle (2) à parois flexibles (9, 10), disposée sur l'appui (1), remplie de fluide et protégée contre l'influence de la pression est disposée au-dessus du bloc (5) du dispositif d'exploitation et sert ainsi à déterminer la hauteur relative de la poche (2) en utilisant la pression hydrostatique.

13. Dispositif selon la revendication 3 ou 12, caractérisé en ce que les seconds guides de lumière (16) forment avec leurs extrémités une matrice dans une monture (31), cette matrice pouvant être explorée par une caméra vidéo (34).
